# EUROPÄISCHE PATENTSCHRIFT

(11) **EP 3 705 426 B1**
(45) Veröffentlichungstag und Bekanntmachung des Hinweises auf die Patenterteilung: **04.11.2026**
(21) Anmeldenummer: 20161530.9
(22) Anmeldetag: 06.03.2020
(51) Int. Cl.: B65G 47/86, B65B 35/16, B65B 35/26, B67C 7/00, B65G 47/90

(54) **PASSIVE KLAMMERVORRICHTUNG, PASSIVE KLAMMER UND FEDERBÜGEL**
PASSIVE CLAMP DEVICE, PASSIVE CLAMP AND SPRING CLIP
DISPOSITIF DE COLLIER DE SERRAGE PASSIF, COLLIER DE SERRAGE PASSIF ET ÉTRIER ÉLASTIQUE

(30) Priorität: 06.03.2019 DE 102019105652
(43) Veröffentlichungstag der Anmeldung: 09.09.2020
(60) Teilanmeldung: 21171577.6 / 3 907 161
(73) Patentinhaber: KRONES AG, 93073 Neutraubling (DE)
(72) Erfinder: Landler, Bruno, 93073 Neutraubling (DE); Gloetzl, Reiner, 93073 Neutraubling (DE)
(74) Vertreter: Nordmeyer, Philipp Werner

(56) Entgegenhaltungen:
- EP-A1- 1 277 693
- DE-A1- 102008 032 645
- DE-A1- 102014 117 358
- DE-A1- 102017 116 921
- DE-B3- 102014 116 004
- JP-A- 2001 287 795
- JP-A- 2006 315 715
- US-A- 4 475 723
- US-A- 4 556 204
- US-B1- 8 672 376

## Beschreibung

### Technisches Gebiet

Die vorliegende Erfindung betrifft eine passive Klammervorrichtung zum Halten eines Behälters in einer Behälterbehandlungsvorrichtung, beispielsweise zum Halten eines Getränkebehälters an einem Halsabschnitt, eine passive Klammer zum Halten eines Behälters in einer Behälterbehandlungsvorrichtung, beispielsweise zum Halten eines Getränkebehälters an einem Halsabschnitt und einen Federbügel zum Lagern und Vorspannen zweier Klammerarme einer passiven Klammervorrichtung.

### Stand der Technik

Es ist bekannt, in Getränkeabfüllanlagen die jeweils zu befüllenden Behälter beziehungsweise bereits befüllte Behälter mittels Klammervorrichtungen durch die einzelnen Behandlungsstationen der Behälterbehandlungsvorrichtung zu transportieren. Dabei sind unterschiedliche Klammervorrichtungen bekannt, welche die jeweiligen zu behandelnden Behälter auf unterschiedliche Art und Weise halten.

So sind beispielsweise aktive Klammervorrichtungen, bei welchen ein Öffnen und Schließen der jeweiligen Halteabschnitte der Klammervorrichtung mittels eines Aktuators aktiv durchgeführt wird, bekannt. Solche aktiven Klammervorrichtungen dienen insbesondere dazu, eine sichere und schonende Übernahme der jeweiligen Behälter von einer vorhergehenden Klammervorrichtung zu ermöglichen oder eine ebenso sichere und behälterschonende Übergabe der Behälter an eine nachfolgende Klammervorrichtung zu gewährleisten. Solche aktiven Klammervorrichtungen setzen sich aus einer Vielzahl von Einzelteilen, beispielsweise Klammerarmen, Buchsen, Aktuatoren, Vorspannelementen und entsprechenden Verbindungselementen zum sicheren Verbinden der vorgenannten Teile, zusammen. Derart aufgebaute Klammervorrichtungen sind mithin aufwendig zu reinigen und weisen einen entsprechend hohen Fertigungsaufwand auf. Zudem sind zum aktiven Öffnen und Schließen der aktiven Klammervorrichtung entsprechende das Öffnen und Schließen steuernde Teile an einer aktive Klammervorrichtungen aufweisenden Behandlungsvorrichtung vorzusehen.

Fernerhin bekannt sind passive Klammerverrichtungen, welche lediglich durch das Einschieben des jeweiligen Behälters in die Klammervorrichtung mit dem Behälter versehen werden und dann den Behälter halten. Die Klammerarme weisen dabei eine feste Position auf. Zum Greifen eines Behälters muss dieser in die Klammer gedrückt werden. Dabei werden die Klammerarme durch den Behälter nach außen gespreizt, so dass der Behälter gegen die aufgrund des Spreizens der Klammerarme entstehende Schließkraft der Klammerarme bewegt werden muss. Die Klammerarme sind derart ausgebildet, dass ein eingeschobener Behälter durch die Klammerarme in einer im Wesentlichen festen Position gehalten wird. Zum Entnehmen des Behälters aus der Klammervorrichtung ist dieser wieder aus der Klammer herauszuziehen.

Bei einem kontinuierlichen Einschieben des Behälters die Klammer erfolgt somit zuerst ein Aufspreizen der Klammerarme, da diese durch den Behälter verdrängt werden. Um dieses Aufspreizen zu ermöglichen, ist es bekannt, die Klammerarme elastisch auszubilden. Eine derartige Klammervorrichtung ist beispielsweise aus der DE 195 13 221 A1 oder der DE 10 2005 002 715 A1 bekannt. Bei derartigen Klammervorrichtungen sind durch die die Federwirkung bereitzustellen Klammerarme ebenfalls das Gewicht des Behälters aufzunehmen.

Ferner sind passive Klammervorrichtungen bekannt, bei welchen ein Vorspannelement die Klammerarme in einer vorgegebenen Position, in der Regel der geschlossenen Position, vorspannt. Derartige Vorspannelemente sind beispielsweise durch spiralförmig geformte Druckfedern oder durch in der Klammervorrichtung vorgesehenen Magneten ausgebildet. Eine Klammervorrichtung mit letztgenannter Ausbildung ist beispielsweise der DE 10 2017 116 921 A1 zu entnehmen.

Die DE 10 2014 116 004 B3 beschreibt eine Behälterklammer zum Halten und Führen von Behältern. Die EP 1 277 693 A1 beschreibt eine Transporteinrichtung für Behälter in Abfüllanlagen. Die DE 10 2014 117 358 A1 beschreibt eine Flaschenklammer mit Kraftverstärkung. Die US 4 556 204 A beschreibt einen Federbügel mit den Merkmalen des Oberbegriffs des Anspruchs 1.

### Darstellung der Erfindung

Ausgehend von dem bekannten Stand der Technik ist es eine Aufgabe der vorliegenden Erfindung, eine verbesserte Klammervorrichtung zum Halten eines Behälters in einer Behälterbehandlungsvorrichtung, bevorzugt zum Halten eines Getränkebehälters an einem Halsabschnitt, bereitzustellen.

Die Aufgabe wird durch eine passive Klammervorrichtung zum Halten eines Behälters in einer Behälterbehandlungsvorrichtung, bevorzugt zum Halten eines Getränkebehälters an einem Halsabschnitt mit den Merkmalen des Anspruchs 2 gelöst. Vorteilhafte Weiterbildungen ergeben sich aus den Unteransprüchen, der Beschreibung und den Figuren.

Entsprechend wird eine passive Klammervorrichtung zum Halten eines Behälters in einer Behälterbehandlungsvorrichtung, bevorzugt zum Halten eines Getränkebehälters an einem Halsabschnitt, vorgeschlagen, umfassend einen um eine erste Schwenkachse an einem Klammerträger schwenkbar angeordneten ersten Klammerarm mit einem Halteabschnitt zur Anlage an den zu haltenden Behälter, einen um eine zweite Schwenkachse am Klammerträger schwenkbar angeordneten zweiten Klammerarm mit einem Halteabschnitt zur Anlage an den zu haltenden Behälter, und ein Vorspannelement zum Vorspannen der Klammerarme in eine geschlossene Position, wobei die Klammerarme dazu eingerichtet und ausgebildet sind, zum Aufnehmen eines Behälters passiv durch ein Einschieben des Behälters geöffnet zu werden. Die passive Klammervorrichtung kennzeichnet sich ferner dadurch, dass das Vorspannelement ein sich in einer senkrecht zu den Schwenkachsen liegenden Ebene erstreckender elastischer Federbügel ist.

Der Federbügel umfasst einen sich zwischen einer ersten Lagerbuchse zum Lagern eines ersten Klammerarms um seine Schwenkachse und einer zweiten Lagerbuchse zum Lagern eines zweiten Klammerarms um seine Schwenkachse erstreckenden Federbereich, wobei sich der Federbereich in einer senkrecht zu den Schwenkachsen liegenden Ebene erstreckt.

Dadurch, dass das Vorspannelement ein sich in einer senkrecht zu den Schwenkachsen liegenden Ebene erstreckender elastischer Federbügel ist, kann die Klammervorrichtung im Vergleich zu herkömmlichen Klammervorrichtungen verbesserte Hygieneeigenschaften aufweisen. Im Gegensatz zu herkömmlichen Vorspannelementen, wie beispielsweise eine spiralförmige Druckfeder, weist der elastische Federbügel keinerlei Spalte auf, in welchen sich Partikel absetzen können und so die Klammervorrichtung verunreinigen. Ferner sind keine Magnete notwendig, sodass sich entsprechend auch kein metallischer Abrieb an den Magneten ablagern kann, welcher nicht durch normales Abschwallen entfernbar ist. Weiterhin kann dadurch ein Zusammenbau der Klammervorrichtung im Vergleich zu herkömmlichen Klammervorrichtungen vereinfacht sein.

Gemäß einer bevorzugten Ausführungsform ist der Federbügel bezüglich der Schwenkachsen auf einer den Halteabschnitten entgegengesetzten Seite der der Klammerarme angeordnet. Durch diese Anordnung muss der Federbügel nicht, wie bei herkömmlichen passiven Klammervorrichtungen oftmals der Fall, zusätzlich zur Bereitstellung der Federwirkung die Gewichtskraft der Flasche tragen, welche im Bereich der Haltearme durch die Klammerarme aufgenommen und im Bereich der Schwenkachsen an den Klammerträger übertragen wird. Mit anderen Worten kann dadurch eine Entkopplung zwischen dem Bereitzustellen der Federwirkung und dem Aufnehmen der Gewichtskraft des durch die Klammervorrichtung gehaltenen Behälters erzielt werden. Dies mag die Standzeit der Klammervorrichtung Vergleich zu herkömmlichen Klammervorrichtungen, bei welchen die Klammerarme sowohl die Federwirkung bereitzustellen als auch die Gewichtskraft aufnehmen, erhöhen. Zudem ermöglicht dies eine größere Varianz hinsichtlich der Form der Klammerarme und/oder der Mündung der Klammervorrichtung, durch welche ein aufzunehmender Behälter eingeschoben wird, da das Vorspannelement nun auf der gegenüberliegenden Seite bezogen auf die Schwenkachsen, mithin den Lager-und Drehpunkten der Klammerarme, vorgesehen ist.

Um bei einem kompakten Aufbau des Vorspannelements eine erhöhte Elastizität bereitstellen zu können, kann der Federbügel in einem Federbereich entlang seiner Längserstreckung eine Mehrzahl von Krümmungswechseln aufweisen. Mithin kann der Federbügel im Federbereich eine zweidimensionale Wellenform aufweisen. Durch diese Ausbildung des Federbügels kann zum einen der sich nach hinten erstreckende Bauraum des Federbügels im Vergleich zu einem beispielsweise mit einer Krümmung entsprechend größerem Krümmungsradius verkleinert sein. Zudem verlängert sich entsprechend der Anzahl von Krümmungswechseln eine Gesamtlänge und/oder erhöht sich eine Elastizität beziehungsweise Biegeweichheit des Federbügels.

Wenn die Klammerarme in Gravitationsrichtung oberhalb des Klammerträgers angeordnet sind, und dabei bevorzugt die Klammerarme jeweils eine Abstützfläche zum Abstützen auf dem Klammerträger aufweisen, kann die Gewichtskraft des Behälters zumindest teilweise über die Abstandsflächen auf den Klemmträger übertragen werden. Die Klammerarme können entsprechend weniger massiv ausgebildet werden, insbesondere da dadurch ein auf sie in Gravitationsrichtung wirkendes Biegemoment, welches durch die Gewichtskraft des Behälters und einem Hebelarm zwischen der jeweiligen Schwenkachse und dem jeweiligen Haltebereich hervorgerufen wird, nicht komplett durch den jeweiligen Klammerarm in der Lagerung an der Schwenkachse aufzunehmen ist.

Bevorzugt ist die Abstützfläche jedes Klammerarms dabei zwischen der Position der jeweiligen Schwenkachse und dem jeweiligen Haltebereich vorgesehen. So lassen sich die durch das Halten des Behälters stehenden Biegemomente im Klammerarm besonders gering halten. Alternativ oder zusätzlich kann die Abstützfläche auch auf Höhe des Haltebereichs angeordnet sein, bevorzugt in Bezug auf einen durch die Haltebereiche definierten Mittelpunkt radial außerhalb des Haltebereichs. Wenn der Federbügel als 3D-Druck-Teil oder Spritzgussteil, bevorzugt aus einem Kunststoff, besonders bevorzugt aus einem technischen Kunststoff oder einem Hochleistungskunststoff, ganz besonders bevorzugt aus PEEK, ausgebildet ist, kann eine einfache und kostengünstige Herstellung und gleichzeitig eine hohe Formfreiheit erreicht werden.

Die oben gestellte Aufgabe wird weiterhin durch einen Federbügel zum Lagern und Vorspannen zweier Klammerarme einer passiven Klammervorrichtung mit den Merkmalen des Anspruchs 1 gelöst. Vorteilhafte Weiterbildungen des Verfahrens ergeben sich aus den Unteransprüchen sowie der vorliegenden Beschreibung und den Figuren.

Entsprechend wird ein Federbügel zum Lagern und Vorspannen zweier Klammerarme einer passiven Klammervorrichtung vorgeschlagen, umfassend einen sich zwischen einer ersten Lagerbuchse zum Lagern eines ersten Klammerarms um seine Schwenkachse und einer zweiten Lagerbuchse zum Lagern eines zweiten Klammerarms um seine Schwenkachse erstreckenden Federbereich, wobei sich der Federbereich in einer senkrecht zu den Schwenkachsen liegenden Ebene erstreckt.

Die hinsichtlich der passiven Klammervorrichtung beschriebenen Vorteile und Wirkungen können analog durch den Federbügel erzielt werden.

Der Federbügel kann eine oder mehrere der hinsichtlich der passiven Klammervorrichtung beschriebenen bevorzugten Ausführungen und Ausgestaltungen des Vorspannelements beziehungsweise des Federbügels gemäß weiterer bevorzugter Ausführungsformen aufweisen. Das heißt, alle zu den vorgenannten Teilen in Bezug auf die Klammervorrichtung genannten Merkmale treffen auch für den Federbügel zu.

Gemäß der Erfindung ist ein Zapfenelement einstückig mit der ersten Lagerbuchse ausgebildet, wobei das Zapfenelement einen Kopplungsbereich zum Rotationskoppeln mit einem Klammerarm aufweist.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht einer passiven Klammervorrichtung zum Halten eines Behälters;
- Figur 2: schematisch eine Draufsicht der passiven Klammervorrichtung aus Figur 1;
- Figur 3: schematisch eine perspektivische Seitenansicht eines Vorspannelements in Form eines Federbügels der passiven Klammervorrichtung gemäß Figur 1; und
- Figur 4: schematisch eine perspektivische Draufsicht einer nicht erfindungsgemäßen passiven Klammervorrichtung zum Halten eines Behälters.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

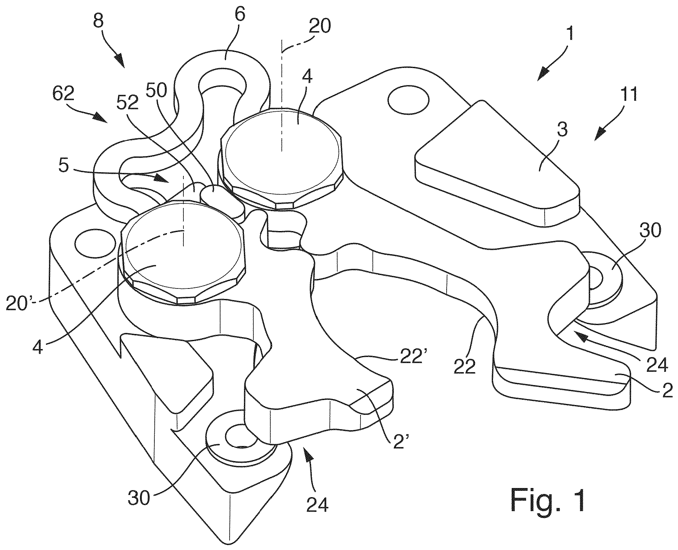

In Figur 1 ist schematisch eine perspektivische Seitenansicht einer passiven Klammervorrichtung 1 zum Halten eines Behälters gezeigt. Die passive Klammervorrichtung 1 ist vorliegend zum Halten eines Getränkebehälters an seinem Halsabschnitt ausgebildet. Sie umfasst einen um eine erste Schwenkachse 20 an einem Klammerträger 3 schwenkbar angeordneten ersten Klammerarm 2 mit einem Halteabschnitt 22 zur Anlage an den zu haltenden Behälter, einen um eine zweite Schwenkachse 20' am Klammerträger 3 schwenkbar angeordneten zweiten Klammerarm 2' mit einem Halteabschnitt 22 zur Anlage an den zu haltenden Behälter, und ein Vorspannelement zum Vorspannen der Klammerarme 2, 2' in eine geschlossene Position, wobei die Klammerarme 2, 2' dazu eingerichtet und ausgebildet sind, zum Aufnehmen eines Behälters passiv durch ein Einschieben des Behälters geöffnet zu werden. Das Vorspannelement ist ein sich in einer senkrecht zu den Schwenkachsen 20, 20' liegenden Ebene erstreckender elastischer Federbügel 6.

Der Federbügel 6 ist bezüglich der Schwenkachsen 20, 20' auf einer den Halteabschnitten 22, 22' entgegengesetzten Seite 8 der der Klammerarme 2, 2' angeordnet. Er weist in einem Federbereich 62 entlang seiner Längserstreckung eine Mehrzahl von Krümmungswechseln auf.

Vorliegend ist die Klammervorrichtung 1 asymmetrisch ausgebildet. Der erste Klammerarm 2 ist mithin länger ausgebildet als der zweite Klammerarm 2', wobei die erste Schwenkachse 20' relativ zu einer Aufnahmeseite 7, auf welcher der Behälter von der Klammervorrichtung 1 aufgenommen wird, gesehen weiter entfernt angeordnet ist, als die zweite Schwenkachse 20'.

Die Klammerarme 2, 2' sind jeweils mittels eines Bolzens 4 an den Klammerträger 3 angebracht.

Der erste Klammerarm 2 und der zweite Klammerarm 2' sind mittels einer Kupplungsanordnung 5 miteinander schwenkgekoppelt, so dass der zweite Klammerarm 2' bei einer Bewegung des ersten Klammerarms 2 eine entsprechende Bewegung erfährt und umgekehrt. Mit anderen Worten ist durch die Kupplungsanordnung 5 eine Position des ersten Klammerarms 2 relativ zu einer Position des zweiten Klammerarms 2' vorgegeben. Vorliegend sind der erste und der zweite Klammerarm 2, 2' derart miteinander gekuppelt, dass eine Bewegung eines Klammerarms 2, 2' eine entsprechende Gegenbewegung des anderen Klammerarms 2', 2 erzeugt.

Die Klammerarme 2, 2' sind durch den Federbügel 6 in eine geschlossene Position vorgespannt, so dass sich die Klammervorrichtung 1 stets in der geschlossenen Position befindet. Die Klammerarme 2, 2' sind dabei lediglich passiv zu öffnen. Mithin ist an der Klammervorrichtung 1 keine Anordnung zum aktiven Öffnen der Klammerarme 2, 2' vorgesehen. Das Öffnen der Klammerarme 2, 2' erfolgt passiv, das heißt durch ein Einschieben oder Eintauchen des Behälters in die Klammervorrichtung 1, wobei die Behälterwand die Klammerarme 2, 2' beim Einschieben oder Eintauchen auseinanderdrückt. Eine andere, aktive, Öffnung durch die Klammervorrichtung 1 selbst, bei welcher der Behälter nicht mit den Klammerarmen 2, 2' interagiert, ist nicht vorgesehen.

Die Kupplungsanordnung 5 liegt vorliegend im Wesentlichen zwischen der ersten Schwenkachse 20 und der zweiten Schwenkachse 20' und ist vorliegend in Form eines an dem ersten Klammerarm 2 angeordneten Zapfenelements 50 und eines mit dem Zapfenelement 50 in Eingriff stehenden, an dem zweiten Klammerarm 2' angeordneten Taschenelements 52 ausgebildet, wobei das Zapfenelement 50 ein weicheres Material als das Taschenelement 52 aufweist.

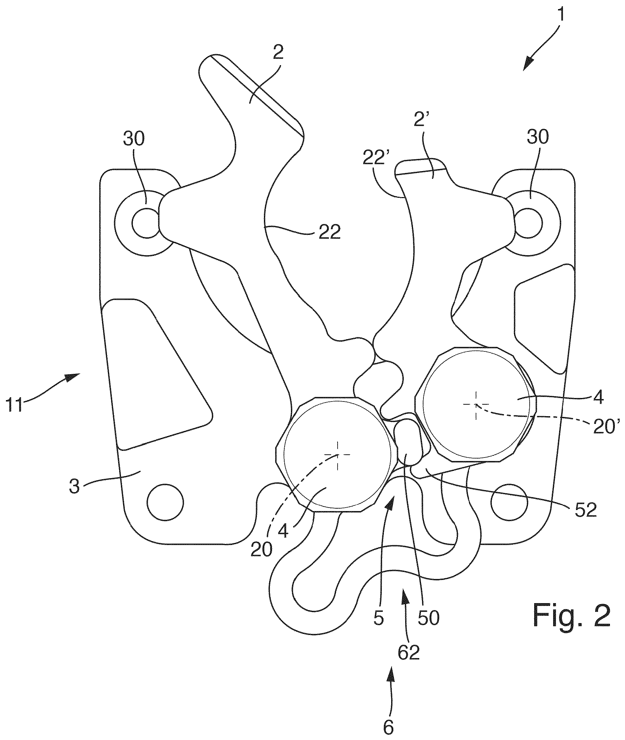

Figur 2 zeigt schematisch eine Draufsicht der passiven Klammervorrichtung 1 aus Figur 1.

Das Taschenelement 52 ist einstückig mit dem zweiten Klammerarm 2' ausgebildet und weist eine Stahllegierung auf. Das Zapfenelement 50 ist einstückig mit dem Federbügel 6 an einem ersten Ende des Federbügels 6 ausgebildet und mit dem auf der lateralen Seite 11 dieses Endes angeordneten ersten Klammerarm 2 rotationsgekoppelt.

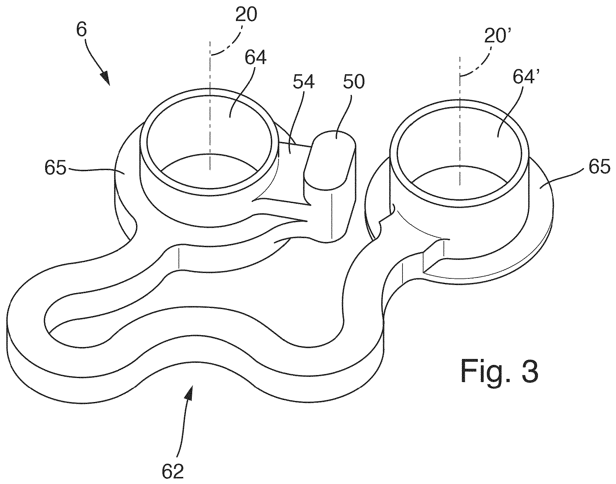

Figur 3 zeigt schematisch eine perspektivische Seitenansicht des Vorspannelements in Form des Federbügels 6 der passiven Klammervorrichtung 1 aus Figur 1.

Der Federbügel 6 weist an seinen Enden Lagerbuchsen 64 zum Lagern eines Klammerarms 2, 2' um seine Schwenkachse 20, 20' auf. Die Klammerarme 2, 2' werden hierzu bei einem Zusammenbau von oben auf die Lagerbuchsen 64 geschoben, bis sie auf einen Absatz 65 der jeweiligen Lagerbuchse 64 treffen.

Um eine Rotationskoppelung zwischen dem Klammerarm 2 und dem Zapfenelement 50 bereitzustellen, weist das Zapfenelement 50 einen passfederartig ausgebildeten Kopplungs-Bereich 54 auf, mit welchem es einen Formschluss mit einem entsprechend ausgebildeten Nut-Bereich im ersten Klammerarm 2 eingeht, sodass um die Schwenkachse 20 zwischen dem Zapfenelement 50 und dem Klammerarm 2 ein Drehmoment übertragbar ist.

Vorliegend ist der Federbügel 6 als Spritzgussteil aus einem Kunststoff, vorliegend optional PEEK, ausgebildet.

Der Klammerträger 3 sowie die Klammerarme 2, 2' sind aus einer Stahllegierung ausgebildet. Dadurch ist zwischen den Lagerbuchsen 64 und den Klammerarmen 2, 2', sowie zwischen den Absätzen 65 und dem Klammerträger 3 jeweils eine hart/weich-Materialpaarung bereitgestellt. Der Federbügel 6 weist mithin ein Material geringerer Härte auf als der Klammerträger 3 sowie die Klammerarme 2, 2'. Entsprechend ist der Federbügel 6 als Verschleißteil vorgesehen.

Der Federbügel 6 zum Lagern und Vorspannen der Klammerarme 2, 2' der passiven Klammervorrichtung 1 umfasst mithin einen sich zwischen einer ersten Lagerbuchse 64 zum Lagern eines ersten Klammerarms 2 um seine Schwenkachse 20 und einer zweiten Lagerbuchse 64' zum Lagern eines zweiten Klammerarms 2' um seine Schwenkachse 20' erstreckenden Federbereich 62, wobei sich der Federbereich 62 in einer senkrecht zu den Schwenkachsen 20, 20' liegenden Ebene erstreckt.

Wie den Figuren 1 und 2 zu entnehmen, sind die Klammerarme 2, 2' in Gravitationsrichtung gesehen oberhalb des Klammerträgers 3 angeordnet. Die Klammerarme 2, 2' weisen an ihrer

Unterseite jeweils eine Abstützfläche 24 zum Abstützen auf dem Klammerträger 3 auf. Hierzu weist der Klammerträger 3 unterhalb der Abstützfläche 24 angeordnete Stützelemente 30 aus einem Kunststoffmaterial auf.

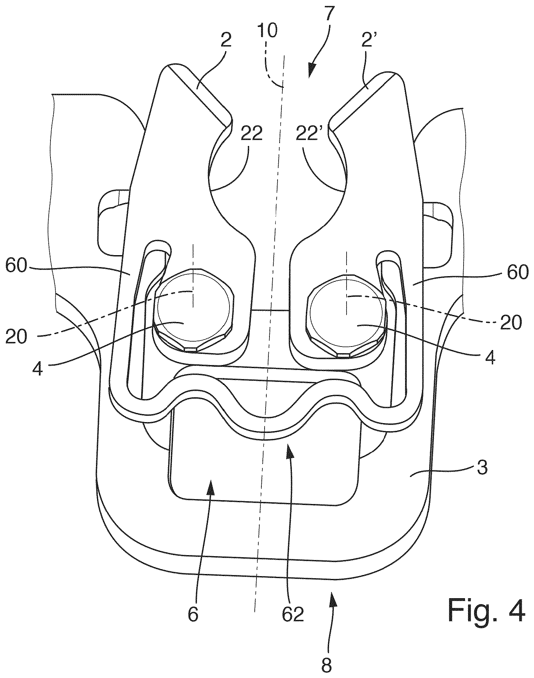

Eine durch einen in der Klammervorrichtung 1 gehaltenen Behälter auf die Haltearme 2, 2' übertragene Gewichtskraft des Behälters kann somit zumindest teilweise bereits über die Abstützflächen 24 in die Stützelemente 30 und somit in den Klammerträger 3 übertragen werden. In Figur 4 ist schematisch eine perspektivische Draufsicht einer passiven Klammervorrichtung 1 zum Halten eines Behälters gemäß einem weiteren nicht erfindungsgemäßen Beispiels gezeigt. Bei dieser Klammervorrichtung 1 sind die Klammerarme 2 und das Vorspannelement in Form des Federbügels 6 einstückig ausgebildet als einteiliges Spritzgussteil aus einem Kunststoff.

Die Klammervorrichtung 1 gemäß Figur 4 weist mithin eine passive Klammer 13 zum Halten eines Behälters in einer passiven Klammervorrichtung 1 auf, welche hier zum Halten eines Getränkebehälters in einem Halsabschnitt ausgebildet ist. Die passive Klammer 13 umfasst mithin einen um eine erste Schwenkachse 20 an schwenkbaren ersten Klammerarm 2 mit einem Halteabschnitt 20 zur Anlage an den zu haltenden Behälter, einen um eine zweite Schwenkachse 20' schwenkbaren zweiten Klammerarm 2' mit einem Halteabschnitt 22' zur Anlage an den zu haltenden Behälter, und ein einstückig mit den Klammerarmen 2, 2' ausgebildetes Vorspannelement, wobei das Vorspannelement ein sich in einer senkrecht zu den Schwenkachsen 20, 20' liegenden Ebene erstreckender elastischer Federbügel 6 ist.

Der Federbügel 6 weist an seinen Enden Anbindungsbereiche 60 zum Anbinden an jeweils einen Klammerarm 2, 2' auf, wobei der Federbügel 6 via seiner Anbindungsbereiche 60 bezogen auf die Schwenkachsen 20, 20' an der Seite 7 der Halteabschnitte 22, 22' an den Klammerarmen 2, 2' angreift und sich auf die den Halteabschnitten 22, 22' entgegengesetzte Seite 8 erstreckt.

Die Anbindungsbereiche 60 erstrecken sich dabei bezogen auf eine Klammermittelachse 10 außerhalb der Schwenkachsen 20, 20'.

Der Federbügel 6 weist wiederum eine Mehrzahl von Krümmungswechseln in seinem Federbereich 62 auf.

Der Klammerträger 3 kann vorliegend auch als Träger einer Behälterbehandlungsmaschine ausgebildet sein. Mit anderen Worten können die Klammerarme 2, 2' auch direkt auf einen Träger der Behandlungsmaschine angeordnet werden. Dieser Träger entspricht dann dem Klammerträger 3. Folglich ist es nicht erforderlich, zwingend einen Klammerträger 3 als Extrateil zwischen den Klammerarmen 2, 2' und dem Träger der Behälterbehandlungsmaschine beziehungsweise Behälterbehandlungsvorrichtung vorzusehen.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung

- 2: Klammerarm
- 20: Schwenkachse
- 22: Halteabschnitt
- 24: Abstützfläche

- 3: Klammerträger
- 30: Stützelement

- 4: Bolzen

- 5: Kopplungsanordnung
- 50: Zapfenelement
- 52: Taschenelement
- 54: Kopplungs-Bereich

- 6: Federbügel
- 60: Anbindungsbereich
- 62: Federbereich
- 64: Lagerbuchse
- 65: Absatz
- 66: Kopplungselement

- 7: Aufnahmeseite

- 8: Abgewandte Seite

- 10: Klammermittelachse

- 11: Laterale Seite

- 12: Laterale Seite

- 13: Passive Klammer

## Patentansprüche

1. Federbügel (6) zum Lagern und Vorspannen zweier Klammerarme (2, 2') einer passiven Klammervorrichtung (1), umfassend eine erste Lagerbuchse (64) zum Lagern eines ersten Klammerarms (2) um seine Schwenkachse (20), eine zweite Lagerbuchse (64') zum Lagern eines zweiten Klammerarms (2') um seine Schwenkachse (22) und einen sich zwischen der ersten Lagerbuchse (64) und der zweiten Lagerbuchse (64') erstreckenden Federbereich (62), wobei sich der Federbereich (62) in einer senkrecht zu den Schwenkachsen (20, 20') liegenden Ebene erstreckt
**dadurch gekennzeichnet, dass**
ein Zapfenelement (50) einstückig mit der ersten Lagerbuchse (64) ausgebildet ist und das Zapfenelement (50) einen Kopplungsbereich (54) zum Rotationskoppeln mit einem Klammerarm (2) aufweist.

2. Passive Klammervorrichtung (1) zum Halten eines Behälters in einer Behälterbehandlungsvorrichtung, bevorzugt zum Halten eines Getränkebehälters an einem Halsabschnitt, umfassend einen um eine erste Schwenkachse (20) an einem Klammerträger (3) schwenkbar angeordneten ersten Klammerarm (2) mit einem Halteabschnitt (22) zur Anlage an den zu haltenden Behälter, einen um eine zweite Schwenkachse (20') am Klammerträger (3) schwenkbar angeordneten zweiten Klammerarm (2') mit einem Halteabschnitt zur Anlage an den zu haltenden Behälter, und ein Vorspannelement zum Vorspannen der Klammerarme (2, 2') in eine geschlossene Position, wobei die Klammerarme (2, 2') dazu eingerichtet und ausgebildet sind, zum Aufnehmen eines Behälters passiv durch ein Einschieben des Behälters geöffnet zu werden, wobei das Vorspannelement ein sich in einer senkrecht zu den Schwenkachsen (20, 20') liegenden Ebene erstreckender elastischer Federbügel (6) gemäß Anspruch 1 ist.

3. Passive Klammervorrichtung (1) gemäß Anspruch 2, **dadurch gekennzeichnet, dass** der Federbügel (6) bezüglich der Schwenkachsen (20, 20') auf einer den Halteabschnitten (22, 22') entgegengesetzten Seite der Klammerarme (2, 2') angeordnet ist.

4. Passive Klammervorrichtung (1) gemäß Anspruch 2 oder 3, **dadurch gekennzeichnet, dass** das der Federbügel (6) in einem Federbereich (62) entlang seiner Längserstreckung eine Mehrzahl von Krümmungswechseln aufweist.

5. Passive Klammervorrichtung (1) gemäß einem der Ansprüche 2 bis 4, **dadurch gekennzeichnet, dass** die Klammerarme (2, 2') in Gravitationsrichtung oberhalb des Klammerträgers (3) angeordnet sind, wobei bevorzugt die Klammerarme (2, 2') jeweils eine Abstützfläche (24) zum Abstützen auf dem Klammerträger (3) aufweisen, wobei die Abstützfläche (24) jedes Klammerarms (2, 2') bevorzugt zwischen der Position der jeweiligen Schwenkachse (20, 20') und dem jeweiligen Haltebereich (22, 22') vorgesehen ist und/oder auf Höhe des jeweiligen Haltebereichs (22, 22') vorgesehen ist.

6. Passive Klammervorrichtung (1) gemäß einem der Ansprüche 2 bis 5, **dadurch gekennzeichnet, dass** der Federbügel (6) als 3D-Druck-Teil oder Spritzgussteil, bevorzugt aus einem Kunststoff, besonders bevorzugt aus einem technischen Kunststoff oder einem Hochleistungskunststoff, ganz besonders bevorzugt aus PEEK, ausgebildet ist.

## Claims

1. A spring clip (6) for bearing and pre-tensioning two clamping arms (2, 2') of a passive clamping apparatus (1), comprising a first bearing bushing (64) for bearing a first clamping arm (2) about its pivot axis (20), a second bearing bushing (64') for bearing a second clamping arm (2') about its pivot axis (22) and a spring region (62) extending between the first bearing bushing (64) and the second bearing bushing (64'), wherein the spring region (62) extends in a plane perpendicular to the pivot axes (20, 20'),
**characterized in that**
a pin element (50) is formed in one piece with the first bearing bushing (64) and the pin element (50) has a coupling region (54) for rotational coupling to a clamping arm (2).

2. A passive clamping apparatus (1) for holding a container in a container handling apparatus, preferably for holding a beverage container at a neck portion, comprising a first clamping arm (2) which is arranged on a clamping carrier (3) so as to be pivotable about a first pivot axis (20) and has a holding portion (22) for resting against the container to be held, a second clamping arm (2') which is arranged on the clamping carrier (3) so as to be pivotable about a second pivot axis (20') and has a holding portion for resting against the container to be held, and a pre-tensioning member for pre-tensioning the clamping arms (2, 2') in a closed position, wherein the clamping arms (2, 2') are configured and constructed to be opened passively in order to receive a container, by the container being pushed in, wherein the pre-tensioning member is an elastic spring clip (6) according to claim 1, extending in a plane perpendicular to the pivot axes (20, 20').

3. The passive clamping apparatus (1) according to claim 2,
**characterized in that** the spring clip (6) is arranged on a side of the clamping arms (2, 2') opposite the holding portions (22, 22') with respect to the pivot axes (20, 20').

4. The passive clamping apparatus (1) according to claim 2 or 3, **characterized in that** the spring clip (6) has a plurality of changes in curvature in a spring region (62) along its longitudinal extent.

5. The passive clamping apparatus (1) according to any of claims 2 to 4, **characterized in that** the clamping arms (2, 2') are arranged above the clamping carrier (3) in the direction of gravity, wherein preferably the clamping arms (2, 2') each have a support surface (24) for supporting on the clamping carrier (3), wherein the support surface (24) of each clamping arm (2, 2') is preferably provided between the position of the particular pivot axis (20, 20') and the particular holding region (22, 22') and/or is provided at the level of the particular holding region (22, 22').

6. The passive clamping apparatus (1) according to any of claims 2 to 5, **characterized in that** the spring clip (6) is constructed as a 3D printed part or injection molded part, preferably made of a plastic, particularly preferably of an engineering plastic or a high-performance plastic, most preferably of PEEK.

## Revendications

1. Étrier à ressort (6) destiné à supporter et à précontraindre deux bras de serrage (2, 2') d'un dispositif de serrage passif (1), comprenant une première douille de support (64) destinée à supporter un premier bras de serrage (2) autour de son axe de pivotement (20), une seconde douille de support (64') destinée à supporter un second bras de serrage (2') autour de son axe de pivotement (22) et une zone de ressort (62) s'étendant entre la première douille de support (64) et la seconde douille de support (64'), dans lequel la zone de ressort (62) s'étend dans un plan perpendiculaire aux axes de pivotement (20, 20')
**caractérisé en ce**
**qu'**un élément formant tourillon (50) est réalisé d'un seul tenant avec la première douille de support (64) et l'élément formant tourillon (50) présente une zone d'accouplement (54) destinée à l'accouplement en rotation avec un bras de serrage (2).

2. Dispositif de serrage passif (1) destiné à maintenir un récipient dans un dispositif de traitement de récipients, de préférence destiné à maintenir un récipient pour boisson au niveau d'une section formant goulot, comprenant un premier bras de serrage (2) disposé de manière pivotante autour d'un premier axe de pivotement (20) sur un moyen de soutien de serrage (3) et comportant une section de maintien (22) destinée à s'appliquer contre le récipient à maintenir, un second bras de serrage (2') disposé de manière pivotante autour d'un second axe de pivotement (20') sur le moyen de soutien de serrage (3) et comportant une section de maintien destinée à s'appliquer contre le récipient à maintenir, et un élément de précontrainte destiné à précontraindre les bras de serrage (2, 2') dans une position fermée, dans lequel les bras de serrage (2, 2') sont conçus et réalisés pour être ouverts passivement par une insertion d'un récipient pour la réception du récipient, dans lequel l'élément de précontrainte est un étrier à ressort (6) élastique selon la revendication 1, s'étendant dans un plan perpendiculaire aux axes de pivotement (20, 20').

3. Dispositif de serrage passif (1) selon la revendication 2,
**caractérisé en ce que** l'étrier à ressort (6) est disposé sur un côté des bras de serrage (2, 2') opposé aux sections de maintien (22, 22') par rapport aux axes de pivotement (20, 20').

4. Dispositif de serrage passif (1) selon la revendication 2 ou 3, **caractérisé en ce que** l'étrier à ressort (6) présente, dans une zone de ressort (62) le long de son extension longitudinale, une pluralité de changements de courbure.

5. Dispositif de serrage passif (1) selon l'une des revendications 2 à 4, **caractérisé en ce que** les bras de serrage (2, 2') sont disposés au-dessus du moyen de soutien de serrage (3) dans le sens de la gravité, dans lequel les bras de serrage (2, 2') présentent de préférence respectivement une surface d'appui (24) destinée à s'appuyer sur le moyen de soutien de serrage (3), dans lequel la surface d'appui (24) de chaque bras de serrage (2, 2') est de préférence prévue entre la position de l'axe de pivotement (20, 20') respectif et la zone de maintien (22, 22') respective et/ou est prévue à hauteur de la zone de maintien (22, 22') respective.

6. Dispositif de serrage passif (1) selon l'une des revendications 2 à 5, **caractérisé en ce que** l'étrier à ressort (6) est réalisé sous forme de pièce d'impression 3D ou de pièce moulée par injection, de préférence en une matière plastique, de manière particulièrement préférée en une matière plastique technique ou en une matière plastique haute performance, de manière tout particulièrement préférée en PEEK.
